# EUROPEAN PATENT SPECIFICATION

(11) **EP 2 747 380 B1**
(45) Date of publication and mention of the grant of the patent: **09.11.2016**
(21) Application number: 12835554.2
(22) Date of filing: 28.09.2012
(51) Int. Cl.: H04L 29/08, G06F 9/48, H04L 29/06

(54) **DATA PROCESSING METHOD, ACCESS CHECKING EQUIPMENT AND SYSTEM THEREOF**
DATENVERARBEITUNGSVERFAHREN, ZUGANGSPRÜFUNGSVORRICHTUNG UND SYSTEM DAFÜR
PROCÉDÉ DE TRAITEMENT DE DONNÉES, ÉQUIPEMENT DE VÉRIFICATION D'ACCÈS, ET SYSTÈME CORRESPONDANT

(30) Priority: 28.09.2011 CN 201110301960
(43) Date of publication of application: 25.06.2014
(73) Proprietor: Huawei Technologies Co., Ltd., Longgang District Shenzhen, Guangdong 518129 (CN)
(72) Inventor: LIN, Qiangmin, Guangdong 518129 (CN); LIU, Jianjun, Guangdong 518129 (CN)
(74) Representative: Kreuz, Georg Maria
(86) International application number: PCT/CN2012/082319
(87) International publication number: WO 2013/044846

(56) References cited:
- EP-A1- 2 003 852
- CN-A- 1 992 889
- CN-A- 101 668 022
- CN-A- 102 103 518
- CN-A- 102 355 501
- US-A1- 2008 228 865
- US-A1- 2009 216 975
- US-A1- 2011 004 878

## Description

### TECHNICAL FIELD

The present invention relates to the communications field, and in particular, to a data processing method, a connection auditing device, and a system.

### BACKGROUND

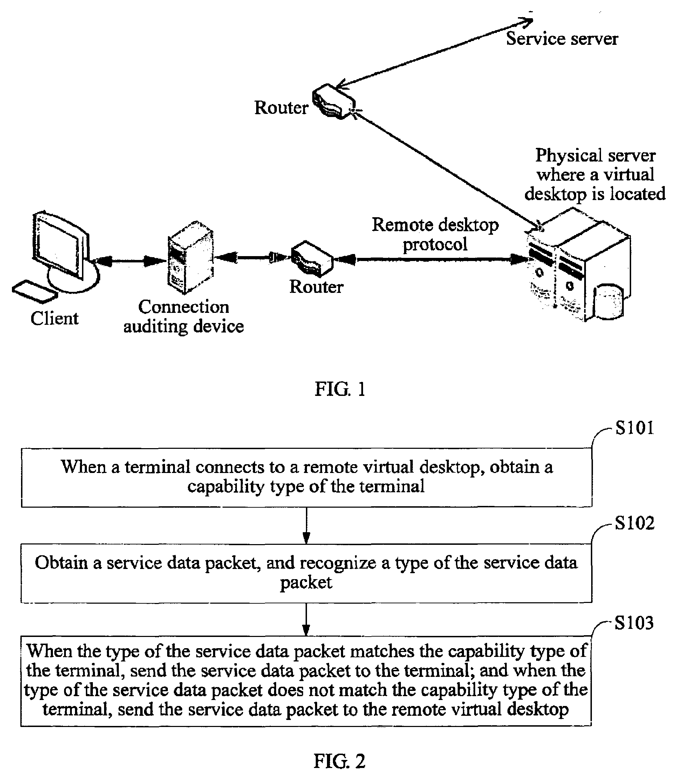

With the popularization of cloud platforms, users are deploying more and more services to the cloud platforms. After passing connection right verification and validity authentication of a connection auditing device, a client connects to a remote virtual desktop of a cloud platform. After receiving service data packets from a service server, the virtual desktop performs encoding and decoding processing, and transmits, by using a remote desktop protocol, the processed service data packets to a terminal for displaying, as shown in FIG. 1. The virtual desktop is a virtual machine that is virtualized on a physical server by using a virtualization platform. The virtual machine has a complete service processing capability, and provides service processing and a remote virtual desktop office for a customer. The service data packets include a keyboard service data packet, a mouse service data packet, a video service data packet, a voice service data packet and the like.

When the service data packets processed by the virtual desktop are excessively large, some services with a high real-time performance cannot be responded to in a timely manner. In the prior art, the remote desktop protocol parses and recognizes the service data packets, and preferentially transmits pre-agreed content, for example, a voice service data packet, so as to achieve preferential processing of a real-time service. Specifically, after receiving all of the processed service data packets from the virtual desktop, the remote desktop protocol recognizes the voice service data packet, and places the voice service data packet at the beginning of a sending queue so as to preferentially transmit the voice service data packet, thereby achieving preferential processing of the real-time service.

The prior art has the following disadvantages: In the prior art, the virtual desktop relies entirely on a computing unit of a physical server where the virtual desktop is located to perform the work of encoding and decoding all of the service data packets, so that consumption of the computation capability of a CPU is excessive, which reduces the real-time performance of a service, resulting in degraded service experience of a user during terminal displaying.

US 2011/004878 A1 relates to methods and systems for dynamically determining to execute a virtual machine on one of a local computing machine and a remote computing machine. A system can include a local computing machine, a remote computing machine and an execution manager that executes on a processor. The execution manager can obtain the characteristics of a local computing machine, and of a network between the local computing machine and the remote computing machine. The execution manager can then apply a policy to the local computing machine characteristics and the network characteristics to determine whether to execute a virtual machine on the local computing machine or the remote computing machine. Responsive to applying this policy, the execution manager can forward an execution instruction to one of either a hypervisor executing on the local computing machine and the remote computing machine, to execute the virtual machine.

### SUMMARY

To improve service experience of a user during terminal displaying, embodiments of the present invention provide a data processing method, a connection auditing device, and a system. The technical solutions are as follows:
A data processing method includes:
   when a terminal connects to a remote virtual desktop, obtaining a capability type of the terminal;
   obtaining a service data packet, and recognizing a type of the service data packet; and
   when the type of the service data packet matches the capability type of the terminal, sending the service data packet to the terminal; and when the type of the service data packet does not match the capability type of the terminal, sending the service data packet to the remote virtual desktop.

A connection auditing device includes:
an obtaining module, configured to: when a terminal connects to a remote virtual desktop, obtain a capability type of the terminal;
an obtaining and recognizing module, configured to obtain a service data packet, and recognize a type of the service data packet; and
a sending module, configured to: when the type of the service data packet matches the capability type of the terminal, send the service data packet to the terminal; and when the type of the service data packet does not match the capability type of the terminal, send the service data packet to the remote virtual desktop.

A data processing system includes a terminal, a physical server, and the connection auditing device, where
the terminal is configured to connect to a remote virtual desktop; and receive a service data packet sent by the connection auditing device; and
the physical server is configured to receive the service data packet sent by the connection auditing device, where the remote virtual desktop is located on the physical server.

The technical solutions provided by the embodiments of the present invention have the following beneficial effects: According to a capability type of a terminal, a service data packet that matches the capability type of the terminal is sent to the terminal for subsequent processing, and a service data packet that does not match the capability type of the terminal is sent to a remote virtual desktop of a cloud platform for subsequent processing. In this way, the amount of service data processed by a physical server where the remote virtual desktop is located is obviously reduced, so that consumption of the computation capability of a CPU is reduced, and the real-time performance of a service is improved accordingly, thereby improving service experience of a user during terminal displaying.

### BRIEF DESCRIPTION OF DRAWINGS

To describe the technical solutions according to the embodiments of the present invention more clearly, the following briefly introduces accompanying drawings required for describing the embodiments. Apparently, the accompanying drawings in the following description are only some embodiments of the present invention, and a person of ordinary skill in the art can derive other drawings from the accompanying drawings without creative efforts.
FIG 1 is a schematic diagram of a network deployment provided by the prior art;
FIG 2 is a flowchart of an embodiment of a data processing method according to Embodiment 1 of the present invention;
FIG. 3 is a flowchart of an embodiment of a data processing method according to Embodiment 2 of the present invention;
FIG 4 is a schematic diagram of a network deployment of an embodiment of a data processing method-according to Embodiment 2 of the present invention;
FIG. 5 is a first schematic structural diagram of an embodiment of a connection auditing device according to Embodiment 3 of the present invention;
FIG 6 is a second schematic structural diagram of an embodiment of a connection auditing device according to an embodiment of the present invention; and
FIG. 7 is a schematic structural diagram of an embodiment of a data processing system according to Embodiment 4 of the present invention.

### DESCRIPTION OF EMBODIMENTS

Embodiments of the present invention provide a data processing method, a connection auditing device, and a system.

In order to make the objectives, technical solutions and advantages of the present invention clearer, the following describes the embodiments of the present invention in detail with reference to the accompanying drawings.

### Embodiment 1

Referring to FIG 2, FIG. 2 is a flowchart of an embodiment of a data processing method according to Embodiment 1 of the present invention. The data processing method includes:
S101: When a terminal connects to a remote virtual desktop, obtain a capability type of the terminal.
S102: Obtain a service data packet, and recognize a type of the service data packet.
S103: When the type of the service data packet matches the capability type of the terminal, send the service data packet to the terminal; and when the type of the service data packet does not match the capability type of the terminal, send the service data packet to the remote virtual desktop.

Further, the obtaining a capability type of the terminal includes:
receiving terminal connection information sent by the terminal, and obtaining the capability type of the terminal from the terminal connection information.

Further, the capability type of the terminal includes: having a voice encoding and decoding capability, having a video encoding and decoding capability, or having a Hypertext Markup Language HTML page parsing capability.

Further, the obtaining a service data packet includes:
receiving the service data packet sent by a service server.

Further, after the sending the service data packet to the remote virtual desktop, the method further includes:
receiving, by the remote virtual desktop, the service data packet, and performing first processing on the service data packet; and
transmitting, by the remote virtual desktop by using a remote desktop protocol, the service data packet obtained through the first processing to the terminal for displaying.

In this embodiment, according to a capability type of a terminal, a service data packet that matches the capability type of the terminal is sent to the terminal for subsequent processing, and a service data packet that does not match the capability type of the terminal is sent to a remote virtual desktop of a cloud platform for subsequent processing. In this way, the amount of service data processed by a physical server where the remote virtual desktop is located is obviously reduced, so that consumption of the computation capability of a CPU is reduced, and the real-time performance of a service is improved accordingly, thereby improving service experience of a user during terminal displaying.

### Embodiment 2

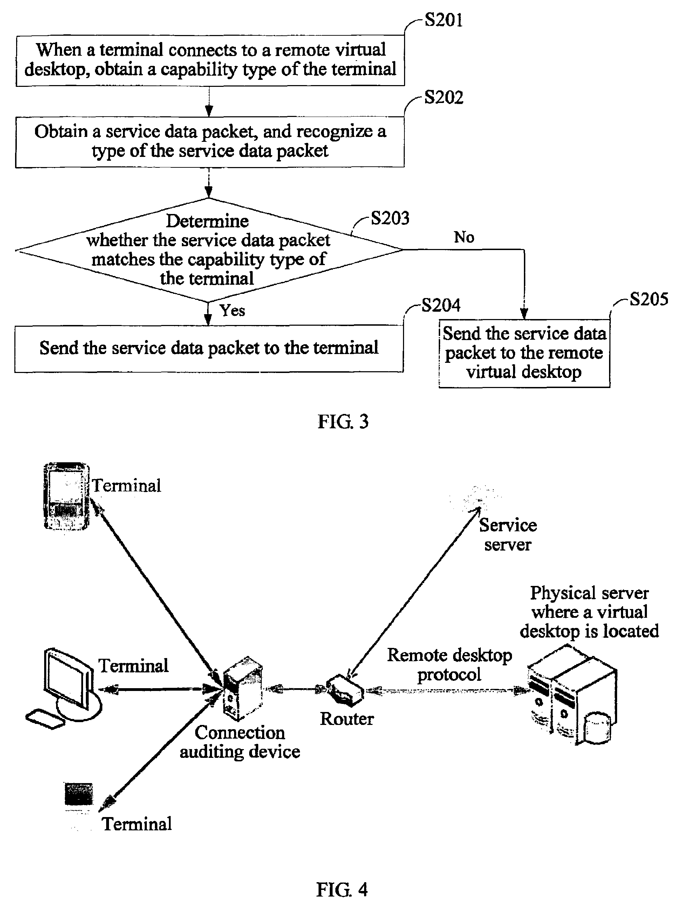

Referring to FIG 3, FIG. 3 is a flowchart of an embodiment of a data processing method according to Embodiment 2 of the present invention. The data processing method includes:
S201: When a terminal connects to a remote virtual desktop, obtain a capability type of the terminal.

In an actual application, the terminal may be a mobile phone, a PC (Personal Computer, personal computer), a player, or the like, which is not specifically limited in this embodiment.

The remote virtual desktop is a virtual machine that is virtualized on a physical server by using a virtualization platform. The virtual machine has a complete service processing capability, and provides service processing and a remote virtual desktop office for a customer.

When the terminal connects to the remote virtual desktop, a connection auditing device receives terminal connection information sent by the terminal, and performs connection right verification and validity authentication on the terminal according to the terminal connection information, and when the terminal passes the validity authentication, the terminal connects to the remote virtual desktop by using a remote desktop protocol, as shown in FIG 4. FIG, 4 is a schematic diagram of a network deployment of an embodiment of a data processing method according to Embodiment 2 of the present invention.

The connection auditing device obtains the capability type of the terminal from the terminal connection information. The capability type of the terminal may be at least one of the following: having a voice encoding and decoding capability, having a video encoding and decoding capability, and having a Hypertext Markup Language HTML page parsing capability, to which the capability type of the terminal is not limited, and details are not repeatedly described herein. The capability type of the terminal may be manually configured and added.

In this embodiment, a user may also directly notify the connection auditing device of the capability type of the terminal, so that the connection auditing device obtains the capability type of the terminal.

S202: Obtain a service data packet, and recognize a type of the service data packet.

In this step, after a service server of a cloud platform receives a service request of the terminal or the virtual desktop, the service server sends a service data packet to the connection auditing device according to the service request; and the connection auditing device receives the service data packet sent by the service server, and recognizes a type of the service data packet, where the type of the service data packet includes a voice service, a video service, a mouse service, a keyboard service and other services.

S203: Determine whether the service data packet matches the capability type of the terminal, and if yes, execute S204; if not, execute S205.

In this step, the connection auditing device matches the service data packet with the capability type of the terminal according to the capability type of the terminal, and intelligently determine, according to a matching result, whether to send the service data packet to the terminal or to the remote virtual desktop.

S204: Send the service data packet to the terminal.

Specifically, for example, the type of the service data packet is the voice service, and the capability type of the terminal is having the voice encoding and decoding capability; in this case, the type of the service data packet matches the capability type of the terminal. Accordingly, the service data packet is sent to the terminal, the terminal performs encoding, decoding, and imaging processing on the service data packet, and finally the terminal displays the service data packet to the user.

There may also be multiple capability types of the terminal. For example, the capability types of the terminal are having the voice encoding and decoding capability and having the video encoding and decoding capability. By matching the type of the service data packet, for example, the voice service, with the capability type of the terminal, it is found that the voice service matches the voice encoding and decoding capability. Accordingly, the service data packet corresponding to the voice service is sent to the terminal, the terminal performs encoding, decoding, and imaging processing on the service data packet, and finally the terminal displays the service data packet to the user.

S205: Send the service data packet to the remote virtual desktop.

When the type of the service data packet does not match the capability type of the terminal, the service data packet is sent to the remote virtual desktop. Specifically, for example, the type of the service data packet is the mouse service, and the capability type of the terminal is having the voice encoding and decoding capability. In this case, the type of the service data packet does not match the capability type of the terminal. Accordingly, the service data packet is sent to the remote virtual desktop, and the remote virtual desktop performs first processing on the service data packet, and transmits, by using the remote desktop protocol, the service data packet obtained through the first processing to the terminal for displaying. The first processing is similar to that in the prior art, and details are not repeatedly described herein. For details, reference may be made to relevant description in the prior art.

In this embodiment, a voice software client and video encoding and decoding software may be embedded into the terminal, so that the terminal serves as an SIP (Session Initiation Protocol, session initiation protocol) UE (User Equipment, user equipment) to communicate with an SIP platform by using an SIP/RTP (Real-time Transport Protocol, real-time transport protocol) protocol.

The voice and video services belong to services consuming a large amount of computation, and the keyboard and mouse services belong to services consuming a small amount of computation. In this embodiment, the capability of the terminal is generally for the services consuming a large amount of computation, such as the voice service and the video service, and the services consuming a large amount of computation require a high real-time performance. Compared with the prior art, in this embodiment, the amount of computation of the physical server where the virtual desktop is located is obviously reduced.

In this embodiment, according to a capability type of a terminal, a service data packet that matches the capability type of the terminal is sent to the terminal for subsequent processing, and a service data packet that does not match the capability type of the terminal is sent to a remote virtual desktop for subsequent processing. In this way, the amount of service data processed by a physical server where the remote virtual desktop is located is obviously reduced, so that consumption of the computation capability of a CPU is reduced, and the real-time performance of a service is improved accordingly, thereby improving service experience of a user during terminal displaying.

In addition, in this embodiment, the services consuming a large amount of computation are separated from the remote virtual desktop and processed by the terminal, and the remote virtual desktop only implements light-weight computation tasks, so that not only the capability of the terminal is made full use of, but also the consumption of the computation capability of the physical server where the remote virtual desktop is located is reduced, and the service load of the cloud platform is reduced, thereby improving density of remote virtual desktops of a single server, and reducing a cost. In this embodiment, an intelligent policy is used to determine whether a service needs to be deployed in a bypass manner, so that the service experience of the user is improved by automatically selecting whether to bypass the service.

### Embodiment 3

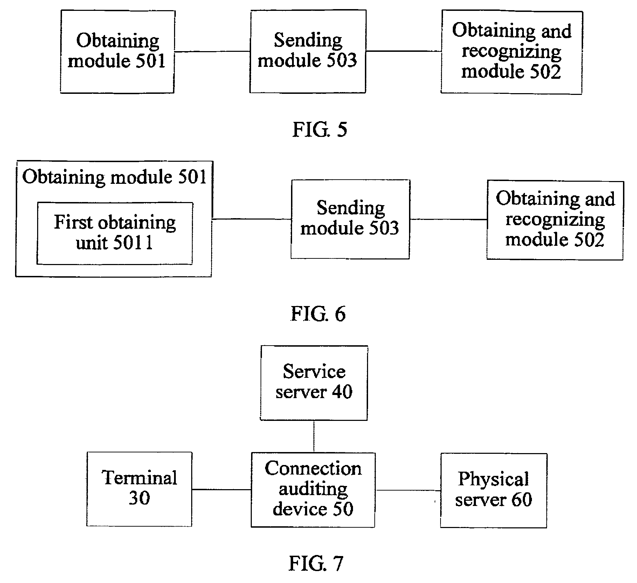

Referring to FIG. 5, FIG 5 is a first schematic structural diagram of an embodiment of a connection auditing device according to Embodiment 3 of the present invention. The connection auditing device includes:
an obtaining module 501, configured to: when a terminal connects to a remote virtual desktop, obtain a capability type of the terminal;
an obtaining and recognizing module 502, configured to obtain a service data packet, and recognize a type of the service data packet; and
a sending module 503, configured to: when the type of the service data packet matches the capability type of the terminal, send the service data packet to the terminal; and when the type of the service data packet does not match the capability type of the terminal, send the service data packet to the remote virtual desktop.

The obtaining module 501 includes a first obtaining unit 5011, as shown in FIG 6. FIG 6 is a second schematic structural diagram of an embodiment of a connection auditing device according to an embodiment of the present invention.

The first obtaining unit 5011 is configured to receive terminal connection information sent by the terminal, and obtain the capability type of the terminal from the terminal connection information.

The obtaining and recognizing module 502 includes:
a receiving unit, configured to receive the service data packet sent by a service server.

In this embodiment, according to a capability type of a terminal, a service data packet that matches the capability type of the terminal is sent to the terminal for subsequent processing, and a service data packet that does not match the capability type of the terminal is sent to a remote virtual desktop for subsequent processing. In this way, the amount of service data processed by a physical server where the remote virtual desktop is located is obviously reduced, so that consumption of the computation capability of a CPU is reduced, and the real-time performance of a service is improved accordingly, thereby improving service experience of a user during terminal displaying.

### Embodiment 4

Referring to FIG. 7, FIG 7 is a schematic structural diagram of an embodiment of a data processing system according to Embodiment 4 of the present invention. The data processing system includes a connection auditing device 50, a terminal 30, and a physical server 60.

The connection auditing device 50 is configured to: when a terminal connects to a remote virtual desktop, obtain a capability type of the terminal; obtain a service data packet, and recognize a type of the service data packet; and when the type of the service data packet matches the capability type of the terminal, send the service data packet to the terminal; and when the type of the service data packet does not match the capability type of the terminal, send the service data packet to the remote virtual desktop;

Further, the connection auditing device 50 is further configured to receive terminal connection information sent by the terminal, and obtain the capability type of the terminal from the terminal connection information.

Further, the connection auditing device 50 is further configured to receive the service data packet sent by a service server.

The terminal 30 is configured to connect to the remote virtual desktop, and receive the service data packet sent by the connection auditing device; and

The physical server 60 is configured to receive the service data packet sent by the connection auditing device, where the remote virtual desktop is located on the physical server.

Further, the physical server 60 is further configured to perform first processing on the service data packet; and transmit, by using a remote desktop protocol, the service data packet obtained through the first processing to the terminal for displaying.

Further, the terminal 30 is further configured to send the terminal connection information to the connection auditing device; and receive and display the service data packet obtained through the first processing and transmitted by the physical server.

Further, the data processing system further includes:
a service server 40, configured to send the service data packet to the connection auditing device.

In this embodiment, according to a capability type of a terminal, a service data packet that matches the capability type of the terminal is sent to the terminal for subsequent processing, and a service data packet that does not match the capability type of the terminal is sent to a remote virtual desktop for subsequent processing. In this way, the amount of service data processed by a physical server where the remote virtual desktop is located is obviously reduced, so that consumption of the computation capability of a CPU is reduced, and the real-time performance of a service is improved accordingly, thereby improving service experience of a user during terminal displaying.

In addition, in this embodiment, the services consuming a large amount of computation are separated from the remote virtual desktop, and the remote virtual desktop implements only light-weight computation tasks, so that the consumption of the computation capability of the physical server where the remote virtual desktop is located is reduced, thereby improving density of remote virtual desktops of a single server. In this embodiment, an intelligent policy is used to determine whether a service needs to be deployed in a bypass manner, so that the service experience of the user is improved by automatically selecting whether to bypass the service.

It should be noted that, the embodiments in this specification are described in a progressive manner, and the focus of the description in each embodiment is a difference from another embodiment. For the identical or similar parts of the embodiments, reference may be made to each other. The apparatus embodiments are basically similar to the method embodiments, and therefore are described briefly. For relevant parts, reference may be made to part of the description in the method embodiments.

It should be noted that in the specification, relational terms such as first and second are used only to differentiate an entity or operation from another entity or operation, and do not require or imply that any actual relationship or sequence exists between these entities or operations. Moreover, the terms "include", "comprise", or any variant thereof is intended to cover a non-exclusive inclusion. Therefore, a process, a method, an article, or a device that includes a list of elements not only includes those elements but also includes other elements which are not expressly listed, or further includes elements inherent to such process, method, article, or device. An element preceded by "includes a ..." does not, without more constraints, preclude the existence of additional identical elements in the process, method, article, or apparatus that includes the element.

A person of ordinary skill in the art may understand that all or a part of the steps of the foregoing embodiments may be implemented by hardware, and may also be implemented by program instructing relevant hardware. The program may be stored in a computer readable storage medium. The storage medium may be a read-only memory, a magnetic disk, an optical disc or the like.

The foregoing descriptions are merely exemplary embodiments of the present invention, but are not intended to limit the present invention. Any modification, equivalent replacement, or improvement made without departing from the principle of the present invention shall fall within the protection scope of the present invention.

## Claims

1. A data processing method, **characterized by** comprising:
when a terminal connects to a remote virtual desktop, obtaining (ski 01) a capability type of the terminal;
obtaining (S 102) a service data packet, and recognizing a type of the service data packet; and
when the type of the service data packet matches the capability type of the terminal, sending (S103) the service data packet to the terminal; and when the type of the service data packet does not match the capability type of the terminal, sending (S103) the service data packet to the remote virtual desktop.

2. The method according to claim 1, **characterized in that** the obtaining a capability type of the terminal comprises:
receiving (S201) terminal connection information sent by the terminal, and obtaining (S201) the capability type of the terminal from the terminal connection information.

3. The method according to claim 1 or 2, **characterized in that** the capability type of the terminal is at least one of the following: having a voice encoding and decoding capability, having a video encoding and decoding capability, and having a Hypertext Markup Language HTML page parsing capability.

4. The method according to any one of claims 1 to 3, **characterized in that** the obtaining a service data packet comprises:
receiving (S202) the service data packet sent by a service server.

5. The method according to any one of claims 1 to 3, **characterized in that** after the sending the service data packet to the remote virtual desktop, the method further comprises:
receiving (S205), by the remote virtual desktop, the service data packet, and performing (S205) first processing on the service data packet; and
transmitting (S204), by the remote virtual desktop by using a remote desktop protocol, the service data packet obtained through the first processing to the terminal for displaying.

6. A connection auditing device, **characterized by** comprising:
an obtaining module (501), configured to: when a terminal connects to a remote virtual desktop, obtain a capability type of the terminal;
an obtaining and recognizing module (502), configured to obtain a service data packet, and recognize a type of the service data packet; and
a sending module (503), configured to: when the type of the service data packet matches the capability type of the terminal, send the service data packet to the terminal; and when the type of the service data packet does not match the capability type of the terminal, send the service data packet to the remote virtual desktop.

7. The device according to claim 6, **characterized in that** the obtaining module (501) comprises:
a first obtaining unit (5011), configured to receive terminal connection information sent by the terminal, and obtain the capability type of the terminal from the terminal connection information.

8. The device according to claim 6 or 7, wherein the obtaining and recognizing module (502) comprises:
a receiving unit, configured to receive the service data packet sent by a service server.

9. A data processing system, comprising a terminal (30), a physical server (60), and the connection auditing device (50) according to any one of claims 6 to 8, **characterized in that**
the terminal (30) is configured to connect to a remote virtual desktop; and receive a service data packet sent by the connection auditing device (50); and
the physical server (60) is configured to receive the service data packet sent by the connection auditing device (50), wherein the remote virtual desktop is located on the physical server (60).

10. The system according to claim 9, **characterized in that** the physical server (60) is further configured to perform first processing on the service data packet; and transmit, by using a remote desktop protocol, the service data packet obtained through the first processing to the terminal (30) for displaying.

11. The system according to claim 10, **characterized in that** the terminal (30) is further configured to send terminal connection information to the connection auditing device (50); and receive and display the service data packet obtained through the first processing and transmitted by the physical server (60).

12. The system according to any one of claims 9 to 11, further **characterized by** comprising:
a service server (40), configured to send the service data packet to the connection auditing device (50).

## Patentansprüche

1. Datenverarbeitungsverfahren, **dadurch gekennzeichnet, dass** es umfasst:
wenn ein Endgerät eine Verbindung zu einem entfernten virtuellen Desktop herstellt, Erhalten (S101) eines Fähigkeitstyps des Endgeräts;
Erhalten (S102) eines Dienstdatenpakets und Erkennen eines Typs des Dienstdatenpakets; und
wenn der Typ des Dienstdatenpakets dem Fähigkeitstyp des Endgeräts entspricht,
Senden (S103) des Dienstdatenpakets an das Endgerät; und wenn der Typ des Dienstdatenpakets dem Fähigkeitstyp des Endgeräts nicht entspricht, Senden (S103) des Dienstdatenpakets an den entfernten virtuellen Desktop.

2. Verfahren gemäß Anspruch 1, **dadurch gekennzeichnet, dass** das Erhalten eines Fähigkeitstyps des Endgeräts umfasst:
Endgerätverbindungsinformationen zu empfangen (S201), die vom Endgerät gesendet werden, und den Fähigkeitstyp des Endgeräts aus den Endgerätverbindungsinformationen zu erhalten (S201).

3. Verfahren gemäß Anspruch 1 oder 2, **dadurch gekennzeichnet, dass** der Fähigkeitstyp des Endgeräts wenigstens einer der folgenden ist: Sprachcodierungs- und -decodierungsfähigkeit aufweisend, Videocodierungs- und -decodierungsfähigkeit aufweisend bzw. Hypertext-Auszeichnungssprache, HTML (Hypertext Markup Language) -Seitenanalysefähigkeit aufweisend.

4. Verfahren gemäß einem der Ansprüche 1 bis 3, **dadurch gekennzeichnet, dass** das Erhalten eines Dienstdatenpakets umfasst:
Empfangen (S202) des Dienstdatenpakets, das von einem Dienstserver gesendet wird.

5. Verfahren gemäß einem der Ansprüche 1 bis 3, **dadurch gekennzeichnet, dass** nach dem Senden des Dienstdatenpakets an den entfernten virtuellen Desktop das Verfahren ferner umfasst:
Empfangen (S205), durch den entfernten virtuellen Desktop, des Dienstdatenpakets und Ausführen (S205) der ersten Verarbeitung des Dienstdatenpakets; und
Senden (S204), durch den entfernten virtuellen Desktop unter Verwendung eines Protokolls des entfernten Desktops, des Dienstdatenpakets, das durch die erste Verarbeitung erhalten wurde, an das Endgerät zur Anzeige.

6. Verbindungsprüfungsvorrichtung, **dadurch gekennzeichnet, dass** sie umfasst:
ein Erhaltungsmodul (501), das ausgelegt ist zum: wenn ein Endgerät eine Verbindung zu einem entfernten virtuellen Desktop herstellt, Erhalten eines Fähigkeitstyps des Endgeräts;
ein Erhaltungs- und Erkennungsmodul (502), das ausgelegt ist zum Erhalten eines Dienstdatenpakets und zum Erkennen eines Typs des Dienstdatenpakets; und
ein Sendemodul (503), das ausgelegt ist zum: wenn der Typ des Dienstdatenpakets dem Fähigkeitstyp des Endgeräts entspricht, Senden des Dienstdatenpakets an das Endgerät; und wenn der Typ des Dienstdatenpakets dem Fähigkeitstyp des Endgeräts nicht entspricht, Senden des Dienstdatenpakets an den entfernten virtuellen Desktop.

7. Vorrichtung gemäß Anspruch 6, **dadurch gekennzeichnet, dass** das Erhaltungsmodul (501) umfasst:
eine erste Erhaltungseinheit (5011), die ausgelegt ist, Endgerätverbindungsinformationen zu empfangen, die vom Endgerät gesendet werden, und den Fähigkeitstyp des Endgeräts aus den Endgerätverbindungsinformationen zu erhalten.

8. Vorrichtung gemäß Anspruch 6 oder 7, wobei das Erhaltungs- und Erkennungsmodul (502) umfasst:
eine Empfangseinheit, die ausgelegt ist, das Dienstdatenpaket zu empfangen, das von einem Dienstserver gesendet wird.

9. Datenverarbeitungssystem, umfassend ein Endgerät (30), einen physikalischen Server (60) und die Verbindung sprüfungsvorrichtung (50) gemäß einem der Ansprüche 6 bis 8, **dadurch gekennzeichnet, dass**
das Endgerät (30) ausgelegt ist, eine Verbindung zu einem entfernten virtuellen Desktop herzustellen; und ein Dienstdatenpaket zu empfangen, das von der Verbindung sprüfungsvorrichtung (50) gesendet wird; und
der physikalische Server (60) ausgelegt ist, das Dienstdatenpaket zu empfangen, das von der Verbindungsprüfungsvorrichtung (50) gesendet wird, wobei der entfernte virtuelle Desktop auf dem physikalischen Server (60) angeordnet ist.

10. System gemäß Anspruch 9, **dadurch gekennzeichnet, dass** der physikalische Server (60) ferner ausgelegt ist, eine erste Verarbeitung des Dienstdatenpakets auszuführen; und, unter Verwendung eines Protokolls des entfernten Desktops, das Dienstdatenpaket, das durch die erste Verarbeitung erhalten wurde, zur Anzeige an das Endgerät (30) zu senden.

11. System gemäß Anspruch 10, **dadurch gekennzeichnet, dass** das Endgerät (30) ferner ausgelegt ist, Endgerätverbindungsinformationen an die Verbindungsprüfungsvoruchtung (50) zu senden; und das Dienstdatenpaket, das durch die erste Verarbeitung erhalten und durch den physikalischen Server (60) gesendet wurde, zu empfangen und anzuzeigen.

12. System nach einem der Ansprüche 9 bis 11, **dadurch gekennzeichnet, dass** es ferner umfasst:
einen Dienstserver (40), der ausgelegt ist, das Dienstdatenpaket an die Verbindungsprüfungsvorrichtung (50) zu senden.

## Revendications

1. Procédé de traitement de données, **caractérisé en ce qu'**il comprend :
lorsqu'un terminal se connecte à un bureau virtuel distant, obtenir (S101) un type de capacité du terminal ;
obtenir (S 102) un paquet de données de service, et reconnaître un type du paquet de données de service ; et
lorsque le type du paquet de données de service correspond au type de capacité du terminal, envoyer (S103) le paquet de données de service au terminal ; et lorsque le type du paquet de données de service ne correspond pas au type de capacité du terminal, envoyer (S 103) le paquet de données de service au bureau virtuel distant.

2. Procédé selon la revendication 1, **caractérisé en ce que** l'étape consistant à obtenir un type de capacité du terminal comprend :
recevoir (S201) des informations de connexion de terminal envoyées par le terminal, et obtenir (S201) le type de capacité du terminal à partir des informations de connexion de terminal.

3. Procédé selon la revendication 1 ou 2, **caractérisé en ce que** le type de capacité du terminal est au moins un des éléments suivants : avoir une capacité de codage et de décodage de la voix, avoir une capacité de codage et de décodage vidéo, et avoir une capacité d'analyse de page HTML (langage de balisage hypertexte).

4. Procédé selon l'une quelconque des revendications 1 à 3, **caractérisé en ce que** l'étape consistant à obtenir un paquet de données de service comprend :
recevoir (S202) le paquet de données de service envoyé par un serveur de service.

5. Procédé selon l'une quelconque des revendications 1 à 3 **caractérisé en ce que**, après l'étape consistant à envoyer le paquet de données de service au bureau virtuel distant, le procédé comprend en outre :
recevoir (S205), par le bureau virtuel distant, le paquet de données de service, et exécuter (S205) un premier traitement sur le paquet de données de service ; et
transmettre (S204), par le bureau virtuel distant en utilisant un protocole de bureau distant, le paquet de données de service obtenu par l'intermédiaire du premier traitement au terminal pour un affichage.

6. Dispositif de vérification de connexion, **caractérisé en ce qu'**il comprend :
un module d'obtention (501), configuré pour : lorsqu'un terminal se connecte à un bureau virtuel distant, obtenir un type de capacité du terminal ;
un module d'obtention et de reconnaissance (502), configuré pour obtenir un paquet de données de service, et pour reconnaître un type du paquet de données de service ; et
un module d'envoi (503), configuré pour : lorsque le type du paquet de données de service correspond au type de capacité du terminal, envoyer le paquet de données de service au terminal ; et lorsque le type du paquet de données de service ne correspond pas au type de capacité du terminal, envoyer le paquet de données de service au bureau virtuel distant.

7. Dispositif selon la revendication 6, **caractérisé en ce que** le module d'obtention (501) comprend :
une première unité d'obtention (5011), configurée pour recevoir des informations de connexion de terminal envoyées par le terminal, et pour obtenir le type de capacité du terminal à partir des informations de connexion de terminal.

8. Dispositif selon la revendication 6 ou 7, dans lequel le module d'obtention et de reconnaissance (502) comprend :
une unité de réception, configurée pour recevoir le paquet de données de service envoyé par un serveur de service.

9. Système de traitement de données, comprenant un terminal (30), un serveur physique (60), et le dispositif de vérification de connexion (50) selon l'une quelconque des revendications 6 à 8, **caractérisé en ce que**
le terminal (30) est configuré pour se connecter à un bureau virtuel distant ; et recevoir un paquet de données de service envoyé par le dispositif de vérification de connexion (50) ; et
le serveur physique (60) est configuré pour recevoir le paquet de données de service envoyé par le dispositif de vérification de connexion (50), le bureau virtuel distant étant situé sur le serveur physique (60).

10. Système selon la revendication 9, **caractérisé en ce que** le serveur physique (60) est en outre configuré pour exécuter un premier traitement sur le paquet de données de service ; et pour transmettre, en utilisant un protocole de bureau distant, le paquet de données de service obtenu par l'intermédiaire du premier traitement au terminal (30) pour un affichage.

11. Système selon la revendication 10, **caractérisé en ce que** le terminal (30) est en outre configuré pour envoyer des informations de connexion de terminal au dispositif de vérification de connexion (50) ; et pour recevoir et afficher le paquet de données de service obtenu par l'intermédiaire du premier traitement et transmis par le serveur physique (60).

12. Système selon l'une quelconque des revendications 9 à 11, **caractérisé en outre en ce qu'**il comprend :
un serveur de service (40), configuré pour envoyer le paquet de données de service au dispositif de vérification de connexion (50).
